# EUROPÄISCHE PATENTSCHRIFT

(11) **EP 1 213 466 B1**
(45) Veröffentlichungstag und Bekanntmachung des Hinweises auf die Patenterteilung: **01.09.2004**
(21) Anmeldenummer: 01127174.9
(22) Anmeldetag: 16.11.2001
(51) Int. Cl.: F02M 25/00

(54) **Verfahren zur Bestimmung des Restgasgehaltes im Verbrennungsraum eines Zylinders eines Viertakt-Verbrennungsmotors**
Method for the determination of the residual gas in the combustion space of a cylinder of a four stroke internal combustion engine
Procédé de détermination de gaz résiduel dans l'espace de combustion d'un cylindre d'un moteur à combustion interne à quatre temps

(30) Priorität: 09.12.2000 DE 10061428
(43) Veröffentlichungstag der Anmeldung: 12.06.2002
(73) Patentinhaber: Bayerische Motoren Werke Aktiengesellschaft, 80809 München (DE)
(72) Erfinder: Prankl, Matthias, 82041 Oberhaching (DE); Krämer, Gerd, 82065 Baierbrunn (DE)

(56) Entgegenhaltungen:
- DE-A- 19 844 086
- DE-A- 19 906 707
- US-A- 5 590 632
- PATENT ABSTRACTS OF JAPAN vol. 1997, no. 12, 25. Dezember 1997 (1997-12-25) -& JP 09 209895 A (TOYOTA MOTOR CORP), 12. August 1997 (1997-08-12) -& DATABASE WPI Section PQ, Week 199742 Derwent Publications Ltd., London, GB; Class Q52, AN 1997-454960 XP002239668 & JP 09 209895 A (TOYOTA MOTOR CORP), 12. August 1997 (1997-08-12)

## Beschreibung

Die Erfindung betrifft ein Verfahren zur Bestimmung des Restgasgehaltes im Verbrennungsraum eines Zylinders eines Viertakt-Verbrennungsmotors sowie ein Verfahren zur Ermittlung eines Zündwinkels für einen Zylinder eines Viertakt-Verbrennungsmotors.

Jeder Zylinder eines Viertakt-Verbrennungsmotors durchläuft während eines Arbeitsganges einen Viertaktzyklus. Zu Beginn des Viertaktzyklus befindet sich der Kolben des Zylinders am höchsten Punkt im Zylinder, dem sogenannten oberen Totpunkt des Kolbens. Da die Kolbenbewegung über die Pleuelstange auf die Kurbelstange übertragen und die Kurbelstangenbewegung in Grad Kurbelwinkel (°KW) angegeben wird, entspricht jede Kolbenstellung einem Kurbelwinkel. Der obere Totpunkt des Kolbens in einem Zylinder wird definitionsgemäß mit 0°KW gleichgesetzt. Im ersten Takt des Zylinders bewegt sich der Kolben nach unten, und gleichzeitig wird ein Luft-Brennstoff-Gemisch durch ein geöffnetes Einlassventil in den Verbrennungsraum des Zylinders eingesaugt. Am unteren Totpunkt des Kolbens (entspricht 180°KW) wechselt die Bewegungsrichtung des Kolbens. Im zweiten Takt wird das Luft-Brennstoff-Gemisch nun bei geschlossenen Ventilen verdichtet. Bei einem Motor mit Direkteinspritzung wird im ersten Takt des Zylinders nur Luft in den Verbrennungsraum des Zylinders eingesaugt, welcher im zweiten Takt verdichtet wird, während das Luft-Brennstoff-Gemisch erst im zweiten Takt im Verbrennungsraum durch Einspritzung von Brennstoff in die verdichtete Luft gebildet wird. Kurz vor Erreichen des zweiten oberen Totpunktes des Kolbens erfolgt die Zündung des Luft-Brennstoff-Gemisches durch eine Zündkerze. Der zweite obere Totpunkt des Kolbens wird deshalb auch oberer Totpunkt des Kolbens bei Zündung genannt. Unter dem Zündwinkel ist der Zeitpunkt ausgedrückt in °KW zu verstehen, zu dem die Zündung erfolgt.

Im dritten Takt des Viertaktzyklus erfolgt durch die Zündung des verdichteten Luft-Brennstoff-Gemisches eine Verbrennung, die eine Volumenausdehnung im Verbrennungsraum und damit eine Kolbenbewegung nach unten verursacht. Nach erneutem Durchlaufen des unteren Totpunktes des Kolbens wird im vierten Takt schließlich das verbrannte Luft-Brennstoff-Gemisch, welches durch die Verbrennung zu Restgas wurde, durch ein geöffnetes Auslassventil aus dem Verbrennungsraum des Zylinders ausgeschoben. Nach Durchlaufen eines Viertaktzyklus beginnt stets ein neuer Viertaktzyklus. Der obere Totpunkt des Kolbens am Ende des vierten Takts ist dabei mit dem oberen Totpunkt des Kolbens am Anfang des ersten Takts identisch. Um eine gleichmäßige Kolbenbewegung zu erhalten, erfolgt normalerweise eine Öffnung des Einlassventils schon während des vierten Taktes und eine Schließung des Auslassventils erst während des ersten Taktes. Während dieser Zeitspanne wird also der sogenannte Ladungswechsel im Verbrennungsraum vollzogen. Dadurch bedingt entstehen sogenannte Ventilspreizungen und Ventilüberschneidungen.

Mit Auslassventilspreizung wird der Abstand in °KW zwischen ganz geöffnetem Auslassventil und oberem Totpunkt des Kolbens bei Ladungswechsel bezeichnet. Die Auslassventilspreizung entspricht somit einer Zeitspanne zwischen dem Zeitpunkt, an dem das Auslassventil die maximale Öffnung aufweist, und dem Zeitpunkt, an dem der Kolben den oberen Totpunkt bei Ladungswechsel erreicht, d.h. die Auslassventilspreizung kann auch als die vorstehend genannte Zeitspanne angesehen werden. Mit Einlassventilspreizung wird dagegen der Abstand in °KW zwischen oberem Totpunkt des Kolbens bei Ladungswechsel und ganz geöffnetem Einlassventil bezeichnet. Die Einlassventilspreizung entspricht somit einer Zeitspanne zwischen dem Zeitpunkt, an dem der Kolben den oberen Totpunkt bei Ladungswechsel erreicht, und dem Zeitpunkt, an dem das Einlassventil die maximale Öffnung aufweist, d.h. die Einlassventilspreizung kann auch als die vorstehend genannte Zeitspanne angesehen werden. Die jeweilige Ventilspreizung kann beispielsweise gemäß der jeweiligen Ventilsteuerung unter Anwendung der Ventilsteuerzeiten (Zeitpunkt Ventil öffnen, Zeitpunkt Ventil schließen) berechnet werden.

Jener Abstand in °KW, bei dem sowohl Einlassventil als auch Auslassventil geöffnet sind, wird als Ventilüberschneidung bezeichnet. Auch die Ventilüberschneidung kann somit als Zeitspanne zwischen dem Zeitpunkt, an dem das Einlassventil öffnet, und dem Zeitpunkt, an dem das Auslassventil schließt, angesehen werden. Der Öffnungszustand eines Ventils wird durch den Ventilhub charakterisiert.

Die Verbrennung des Luft-Brennstoff-Gemisches wird stark durch die Größe des Restgasgehaltes im Zylinder beeinflusst. Zur Erreichung einer optimalen Verbrennung wird z.B. in Abhängigkeit vom Restgasgehalt u.a. der Zündwinkel eingestellt. Der Restgasgehalt im Zylinder bestimmt sich dabei aus der Ventilüberschneidung und somit aus den Größen Einlassventilspreizung, Auslassventilspreizung, Einlassventilhub und Auslassventilhub. Ein Verfahren zur Bestimmung des Restgasgehaltes aus der Ventilüberschneidung ist z.B. aus der DE 198 44 086 A1 bekannt.

Nach dem Stand der Technik wird diese Einflussgröße durch Bestimmen der Einlassventilspreizung berücksichtigt, aus welcher ein jeweils zugehöriger Zündwinkel ermittelt wird.

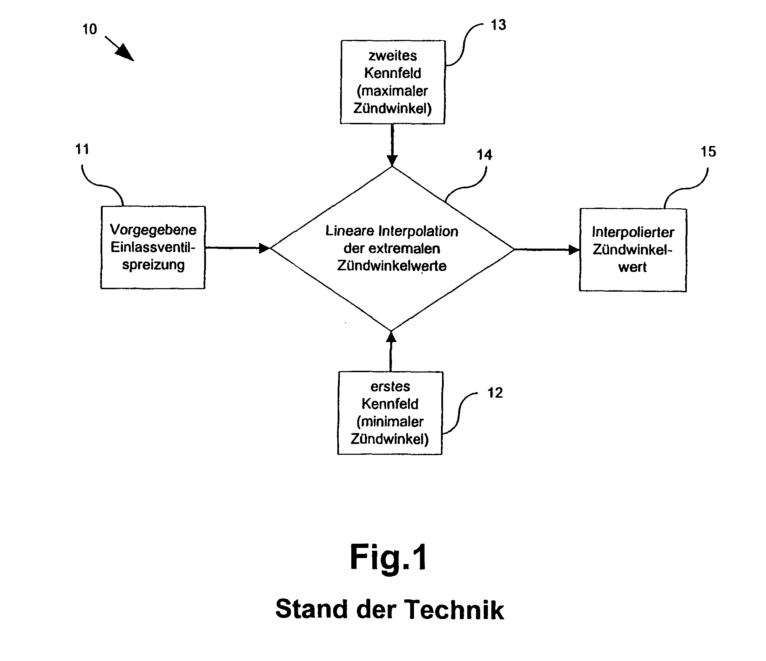

**Fig.1** zeigt ein Diagramm 10 zur Zündwinkelermittlung nach dem Stand der Technik. Eine vorgegebene Einlassventilspreizung 11 wird durch zwei Kennfelder ausgewertet, wobei ein erstes Kennfeld 12 eine minimale Einlassventilspreizung und ein zweites Kennfeld 13 eine maximale Einlassventilspreizung repräsentieren. Im ersten Kennfeld 12 und im zweiten Kennfeld 13 sind entsprechend ein minimaler bzw. ein maximaler Zündwinkelwert abgelegt. Bei Angabe einer Einlassventilspreizung, die zwischen den beiden extremalen Einlassventilspreizungen liegt, wird zwischen den beiden extremalen Zündwinkelwerten linear interpoliert und ein der vorgegebenen Einlassventilspreizung 11 entsprechender interpolierter Zündwinkel 14 ermittelt. Die Steuerung des Zündwinkels lediglich in Abhängigkeit von der Einlassventilspreizung ist für Motoren mit größerer Variabilität im Ventilhub nicht ausreichend genau. Es bietet sich stattdessen an, den Zündwinkel z.B. über den Restgasgehalt im Zylinder zu bestimmen. Der tatsächliche Restgasgehalt kann jedoch nur durch aufwändige Messungen erlangt werden, sodass dies zur Optimierung des Verbrennungsvorgangs in Serienmodellen von Viertakt-Verbrennungsmotoren nicht geeignet erscheint.

Durch die Erfindung wird ein Verfahren geschaffen, mittels dessen auf einfache und ausreichend genaue Weise der Restgasgehalt im Verbrennungsraum eines Zylinders eines Viertakt-Verbrennungsmotors bestimmt werden kann. Ferner wird ein Verfahren zum Ermitteln des Zündwinkels für einen Zylinder eines Viertakt-Verbrennungsmotors geschaffen.

Bei dem erfindungsgemäßen Verfahren zur Bestimmung des Restgasgehaltes im Verbrennungsraum eines Zylinders eines Viertakt-Verbrennungsmotors werden zunächst die Einlassventilspreizung, die Auslassventilspreizung, der Einlassventilhub und der Auslassventilhub während eines Viertaktzyklus bestimmt. Danach wird aus der Auslassventilspreizung und dem Auslassventilhub anhand eines ersten Kennfeldes ein erster Restgasgehaltanteil ermittelt. Der erste Restgasgehaltanteil entspricht einer Restgasmenge, welche zwischen dem oberen Totpunkt des Kolbens bei Ladungswechsel und dem Schließzeitpunkt des Auslassventils durch das Auslassventil in den Verbrennungsraum des Zylinders zurückgesaugt wird.

Weiterhin wird bei dem erfindungsgemäßen Verfahren aus der Einlassventilspreizung, der Auslassventilspreizung, dem Einlassventilhub und dem Auslassventilhub anhand eines zweiten Kennfeldes eine Ventilüberschneidungsfläche ermittelt, deren Flächeninhalt und deren Versetzung zum oberen Totpunkt des Kolbens bei Ladungswechsel bestimmt werden, woraus ein zweiter Restgasgehaltanteil ermittelt wird. Der zweite Restgasgehaltanteil entspricht einer Restgasmenge, welche zwischen dem Öffnungszeitpunkt des Einlassventils und dem Schließzeitpunkt des Auslassventils aus einem Zylinderaußenbereich hinter dem Auslassventil in einen Zylinderaußenbereich vor dem Einlassventil überströmt. Schließlich wird bei dem erfindungsgemäßen Verfahren der Restgasgehalt im Verbrennungsraum des Zylinders berechnet, indem die Summe aus dem ersten Restgasgehaltanteil und dem zweiten Restgasgehaltanteil gebildet wird.

Ein Vorteil des erfindungsgemäßen Verfahrens ist, dass der Restgasgehalt im Verbrennungsraum eines Zylinders eines Viertakt-Verbrennungsmotors durch Ausnutzung bereits bekannter Betriebsparameter ermittelt werden kann. Dadurch kann auf den Einsatz aufwändiger und störanfälliger Restgassensoren verzichtet und eine kostengünstige Steuerung der Verbrennung in Serienmodellen von Viertakt-Verbrennungsmotoren erreicht werden. Der Restgasgehalt wird auf Basis der beiden Restgasgehaltanteile dennoch sehr genau ermittelt, sodass er zur Steuerung anderer Motorbetriebsgrößen, insbesondere des Zündwinkels, herangezogen werden kann.

Das erste Kennfeld kann z.B. eine Schar von Kurven aus jeweils über dem Kurbelwinkel aufgetragenen Ventilhüben sein, woraus sich für die jeweiligen Betriebsparameter der Schließzeitpunkt des Auslassventils (in °KW) ergibt, aus dem beispielsweise anhand von einer Kennlinie ein zugehöriger erster Restgasgehaltanteil ermittelt wird. Das erste Kennfeld kann auch derart ausgestaltet sein, dass aus den jeweiligen Auslassventilschlusszeitpunkten der zugehörige Restgasgehaltanteil direkt ablesbar ist.

Das zweite Kennfeld ist bevorzugt ein Ventilerhebungskennfeld mit einer Schar von Auslassventilhubkurven und Einlassventilhubkurven, die über dem Kurbelwinkel aufgetragen sind. Die jeweilige Ventilüberschneidungsfläche ergibt sich hierbei als Schnittfläche zwischen Auslassventilhubkurve und Einlassventilhubkurve pro Viertaktzyklus.

In einer bevorzugten Ausführungsform des erfindungsgemäßen Verfahrens wird zur Bestimmung der Versetzung der Ventilüberschneidungsfläche zum oberen Totpunkt des Kolbens bei Ladungswechsel die Schwerpunktslage der Ventilüberschneidungsfläche zum oberen Totpunkt des Kolbens bei Ladungswechsel ermittelt.

Ein Vorteil dieser bevorzugten Ausführungsform ist, dass auf der Basis der Ermittlung der Schwerpunktslage die Versetzung der Ventilüberschneidungsfläche mit einfachen mathematischen Methoden bestimmt und diese Ermittlung in einfacher Weise in integrierten Schaltkreisen automatisiert durchgeführt werden kann.

Vorzugsweise wird der Restgasgehalt im Verbrennungsraum des Zylinders berechnet, indem die Summe der beiden Restgasgehaltanteile mit Wichtungsfaktoren gewichtet wird. Ein Vorteil der Anwendung von Wichtungsfaktoren bei der Berechnung des Restgasgehaltes ist, dass auch Umgebungseinflüsse auf den Gehalt an Restgas im Verbrennungsraum berücksichtigt werden. Hierdurch können zusätzliche Einflussgrößen berücksichtigt werden, wodurch die Bestimmung des Restgasgehaltes noch genauer wird.

Als Wichtungsfaktoren werden insbesondere die Drehzahl des Verbrennungsmotors und/oder ein Differenzdruck berücksichtigt, wobei der Differenzdruck aus einem Gasdruck im Zylinderaußenbereich vor dem Einlassventil sowie einem Gasdruck im Zylinderaußenbereich hinter dem Auslassventil berechnet wird. Diese beiden Motorgrößen haben oftmals großen Einfluss auf den Restgasgehalt.

Beispielsweise hat eine Erhöhung der Drehzahl des Verbrennungsmotors eine verringerte Zeitdauer und damit eine verringerte Ladungswechseleffizienz zur Folge. Bei einem erhöhten Gasdruck im Zylinderaußenbereich vor dem Einlassventil wird bei geöffnetem Einlassventil mehr Frischgas in den Zylinder gedrückt, und somit gelangt mehr Restgas durch das Auslassventil aus dem Zylinder hinaus. Hingegen vermindert ein erhöhter Gasdruck im Zylinderaußenbereich hinter dem Auslassventil den Ausschub von Restgas aus dem Zylinder.

Bei einem erfindungsgemäßen Verfahren zur Ermittlung eines Zündwinkels wird zunächst gemäß dem erfindungsgemäßen Verfahren zur Bestimmung des Restgasgehaltes ein Restgasgehalt im Verbrennungsraum eines Zylinders bestimmt und dann aus dem Restgasgehalt unter Anwendung einer Kennlinie ein Zündwinkel ermittelt.

Der Zündwinkel ist unmittelbar in Abhängigkeit vom Restgasgehalt ermittelbar aus einem der momentanen Gashebelstellung zugeordneten, gewünschten Motordrehmoment, zu dessen Erreichen die genannten Betriebsparameter im Rahmen der Motorsteuerung eingestellt wurden. Die ungenaue Interpolation zwischen zwei Extremwerten wie im Stand der Technik wird vermieden, ferner werden zusätzlich variable Motorgrößen berücksichtigt. Auch in diesem Verfahren können bereits bekannte Betriebsparameter verwendet werden, wodurch eine kostengünstige Steuerung der Verbrennung in Serienmodellen von Viertakt-Verbrennungsmotoren erreicht wird.

Die Ermittlung des Restgasgehaltes und des Zündwinkels kann getaktet für jeden Viertaktzyklus erfolgen, sodass fortlaufend für den Viertaktzyklus ein neuer Restgasgehalt mit zugehörigem optimalem Zündwinkel bestimmt wird. Die Neuermittlung des Restgasgehaltes kann jedoch auch nur beispielsweise für jeden zweiten Viertaktzyklus erfolgen, und/oder falls ein großer Gradient hinsichtlich des Motordrehmoments oder der Betriebsparameter Einlassventilspreizung, Auslassventilspreizung, Einlassventilhub und Auslassventilhub registriert wird.

Ein Ausführungsbeispiel der Erfindung ist in den Figuren dargestellt und wird im folgenden näher erläutert. Dabei bezeichnen gleiche Bezugszeichen gleiche Komponenten.

Es zeigen
- Figur 1: ein Diagramm eines Verfahrens zur Zündwinkelermittlung gemäß dem Stand der Technik;
- Figur 2: ein Diagramm eines Verfahrens zur Bestimmung des Restgasgehaltes sowie zur Zündwinkelermittlung gemäß einem Ausführungsbeispiel der Erfindung;
- Figur 3: ein Kennfeld zur Bestimmung eines ersten Restgasgehaltanteils gemäß einem Ausführungsbeispiel der Erfindung; und
- Figur 4: ein Kennfeld zur Bestimmung eines zweiten Restgasgehaltanteils gemäß einem Ausführungsbeispiel der Erfindung.

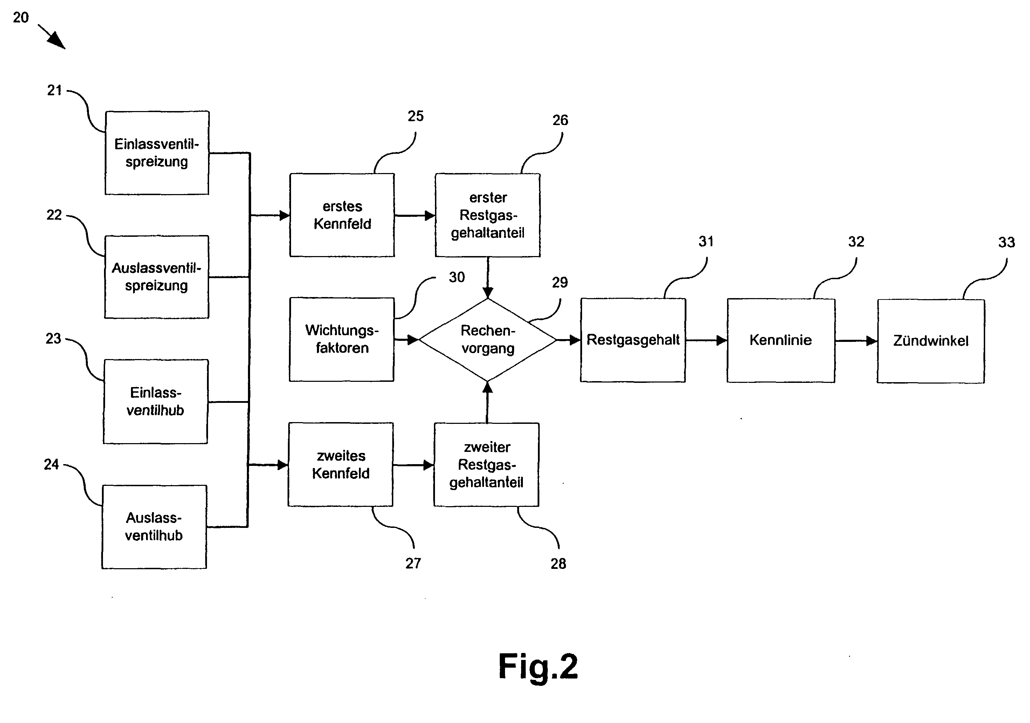

**Fig.2** zeigt ein Diagramm 20 eines Verfahrens zur Bestimmung des Restgasgehaltes sowie zur Zündwinkelermittlung gemäß einem Ausführungsbeispiel der Erfindung. Gemäß dem erfindungsgemäßen Verfahren des Ausführungsbeispiels werden die Betriebsparameter bestimmt, und zwar beispielsweise Einlassventilspreizung 21, Auslassventilspreizung 22, Einlassventilhub 23 und Auslassventilhub 24. Daher stellt das erfindungsgemäße Verfahren eine besonders einfache und genaue Vorgehensweise zur Verbesserung der Verbrennung bei Viertakt-Verbrennungsmotoren dar. Die vier Betriebsparameter gehen zunächst als Eingangsgrößen in ein erstes Kennfeld 25 ein, aus welchem ein erster Restgasgehaltanteil 26 im Zylinder ermittelt wird. Der erste Restgasgehaltanteil 26 entspricht derjenigen Restgasmenge, welche zwischen oberem Totpunkt des Kolbens bei Ladungswechsel und Schließzeitpunkt des Auslassventils durch das Auslassventil in den Verbrennungsraum des Zylinders zurückgesaugt wird.

Die vier Betriebsparameter gehen weiterhin als Eingangsgrößen in ein zweites Kennfeld 27 ein. In dem zweiten Kennfeld 27 ergibt sich aus den Ventilspreizungen eine Ventilüberschneidungsfläche, welche entsprechend ihrem Flächeninhalt und ihrer Versetzung zum oberen Totpunkt des Kolbens bei Ladungswechsel einen zweiten Restgasgehaltanteil 28 im Zylinder liefert. Der zweite Restgasgehaltanteil 28 entspricht derjenigen Restgasmenge, welche zwischen Öffnungszeitpunkt des Einlassventils und Schließzeitpunkt des Auslassventils durch Turbulenzen aus einem Zylinderaußenbereich hinter dem Auslassventil in einen Zylinderaußenbereich vor dem Einlassventil überströmt.

In einem Rechenvorgang 29 wird unter Einwirkung von Wichtungsfaktoren 30 aus dem ersten Restgasgehaltanteil 26 und dem zweiten Restgasgehaltanteil 28 der Restgasgehalt 31 im Verbrennungsraum eines Zylinders berechnet. Insbesondere werden der erste Restgasgehaltanteil 26 und der zweite Restgasgehaltanteil 28 zunächst summiert, und die Summe wird zur Ermittlung des Restgasgehaltes 31 mit Wichtungsfaktoren 30 multipliziert. Aus dem Restgasgehalt 31 wird schließlich mit Hilfe einer Kennlinie 32 ein Zündwinkel 33 ermittelt.

Als Wichtungsfaktoren 30 sind beispielsweise die Drehzahl des Verbrennungsmotors und/oder der Differenzdruck vorgesehen, welcher sich aus der Differenz zwischen dem Gasdruck im Zylinderaußenbereich vor dem Einlassventil und dem Gasdruck im Zylinderaußenbereich hinter dem Auslassventil ergibt.

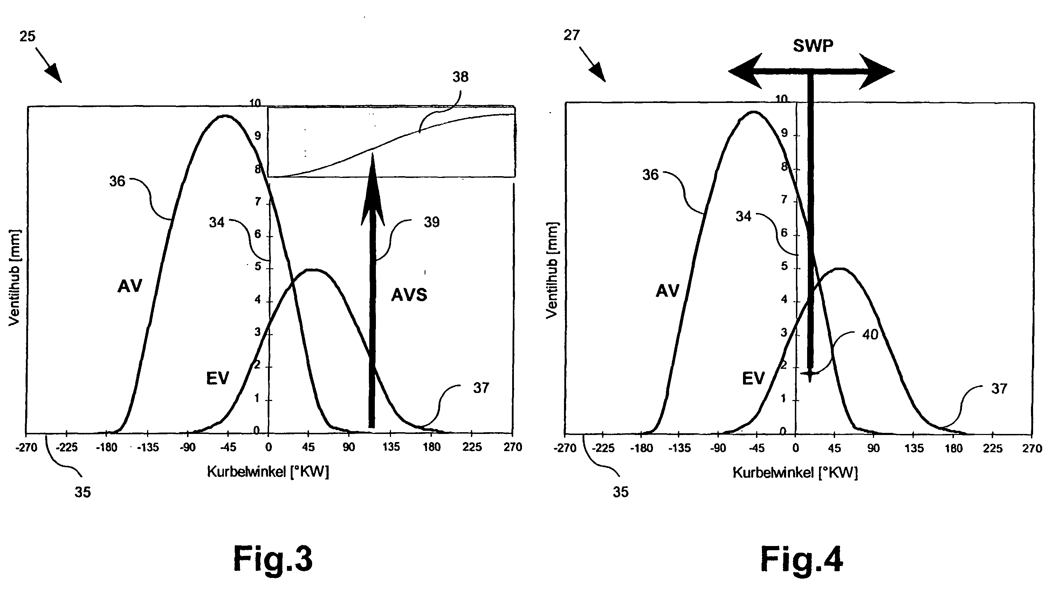

In **Fig.3** ist ein Beispiel für das erste Kennfeld 25 gezeigt, wie es gemäß einem Ausführungsbeispiel der Erfindung zum Einsatz kommt. In dem ersten Kennfeld 25 ist der Ventilhub 34 gegenüber dem Kurbelwinkel 35 aufgetragen. Mit 0°KW ist dabei der obere Totpunkt des Kolbens bei Ladungswechsel im Zylinder bezeichnet. Aufgetragen sind im ersten Kennfeld 25 eine erste Ventilhubkurve 36 für das Auslassventil sowie eine zweite Ventilhubkurve 37 für das Einlassventil. Eine Kennlinie 38 enthält ein relatives Restgasvolumen in Abhängigkeit vom Kurbelwinkel zwischen oberem Totpunkt des Kolbens bei Ladungswechsel und unterem Totpunkt des Kolbens. Demnach ergibt sich aus dem Zeitpunkt 39 des Schließens des Auslassventils AVS unter Anwendung der Kennlinie 38 ein den Betriebsparametern entsprechender erster Restgasgehaltanteil 26. Das erste Kennfeld 25 kann jedoch in einem anderen Ausführungsbeispiel der Erfindung auch derart beschaffen sein, dass auf die zweite Ventilhubkurve 37 verzichtet und der erste Restgasgehaltanteil 26 direkt lediglich aus den beiden Betriebsparametern Auslassventilspreizung 22 und Auslassventilhub 24 ermittelt wird.

**Fig.4** zeigt ein Beispiel für das zweite Kennfeld 27, wie es gemäß einem Ausführungsbeispiel der Erfindung zum Einsatz kommt. In diesem Ausführungsbeispiel der Erfindung entspricht der Grundaufbau des zweiten Kennfeldes 27 dem Aufbau des ersten Kennfeldes 25 aus **Fig.3.** Die erste Ventilhubkurve 36 sowie die zweite Ventilhubkurve 37 liegen derart, dass sie eine Ventilüberschneidungsfläche einschließen, die den Schwerpunkt 40 hat. Je nach vorgegebener Ventilspreizung variiert die Ventilüberschneidungsfläche bezüglich ihrem Flächeninhalt und ihrer Versetzung zum oberen Totpunkt des Kolbens bei Ladungswechsel und somit die Zeitspanne, während welcher Restgas aus einem Zylinderaußenbereich hinter dem Auslassventil in einen Zylinderaußenbereich vor dem Einlassventil überströmen kann. Aus der Ventilüberschneidungsfläche sowie dem Schwerpunkt 40 der Ventilüberschneidungsfläche wird der zweite Restgasgehaltanteil 28 ermittelt.

## Patentansprüche

1. Verfahren zur Bestimmung des Restgasgehaltes (31) im Verbrennungsraum eines Zylinders eines Viertakt-Verbrennungsmotors,
- bei dem die Einlassventilspreizung (21), welche den Abstand in °KW zwischen oberem Totpunkt des Kolbens bei Ladungswechsel und ganz geöffnetem Einlassventil bezeichnet, die Auslassventilspreizung (22), welche den Abstand in °KW zwischen ganz geöffnetem Auslassventil und oberem Totpunkt des kolbens bei Ladungswechsel bezeichnet, der Einlassventilhub (23) und der Auslassventilhub (24) während eines Viertaktzyklus bestimmt werden,
- bei dem aus der Auslassventilspreizung (22) und dem Auslassventilhub (24) anhand eines ersten Kennfeldes (25) ein erster Restgasgehaltanteil (26) ermittelt wird, der einer Restgasmenge entspricht, welche zwischen dem oberen Totpunkt des Kolbens bei Ladungswechsel und dem Schließzeitpunkt des Auslassventils durch das Auslassventil in den Verbrennungsraum des Zylinders zurückgesaugt wird,
- bei dem aus der Einlassventilspreizung (21), der Auslassventilspreizung (22), dem Einlassventilhub (23) und dem Auslassventilhub (24) anhand eines zweiten Kennfeldes (27) eine Ventilüberschneidungsfläche ermittelt wird, deren Flächeninhalt und deren Versetzung zum oberen Totpunkt des Kolbens bei Ladungswechsel bestimmt werden, woraus ein zweiter Restgasgehaltanteil (28) ermittelt wird, der einer Restgasmenge entspricht, welche zwischen dem Öffnungszeitpunkt des Einlassventils und dem Schließzeitpunkt des Auslassventils aus einem Zylinderaußenbereich hinter dem Auslassventil in einen Zylinderaußenbereich vor dem Einlassventil überströmt, und
- bei dem der Restgasgehalt (31) im Verbrennungsraum des Zylinders berechnet wird, indem die Summe aus dem ersten Restgasgehaltanteil (26) und dem zweiten Restgasgehaltanteil (28) gebildet wird.

2. Verfahren gemäß Anspruch 1,
bei dem die Versetzung der Ventilüberschneidungsfläche zum oberen Totpunkt des Kolbens bei Ladungswechsel durch eine Bestimmung der Schwerpunktslage (40) der Ventilüberschneidungsfläche zum oberen Totpunkt des Kolbens bei Ladungswechsel ermittelt wird.

3. Verfahren gemäß Anspruch 1 oder 2,
bei dem der Restgasgehalt (31) im Verbrennungsraum des Zylinders berechnet wird, indem die Summe der beiden Restgasgehaltanteile (26, 28) mit Wichtungsfaktoren (30) gewichtet wird.

4. Verfahren gemäß Anspruch 3,
bei dem als Wichtungsfaktoren (30) die Drehzahl des Verbrennungsmotors und/oder ein Differenzdruck berücksichtigt werden, wobei der Differenzdruck aus einem Gasdruck im Zylinderaußenbereich vor dem Einlassventil sowie einem Gasdruck im Zylinderaußenbereich hinter dem Auslassventil berechnet wird.

5. Verfahren zur Ermittlung eines Zündwinkels (33) für einen Zylinder in einem Verbrennungsmotor,
bei dem gemäß dem Verfahren gemäß einem der Ansprüche 1 bis 4 ein Restgasgehalt (31) im Verbrennungsraum des Zylinders bestimmt und aus dem Restgasgehalt (31) unter Anwendung einer Kennlinie (32) ein Zündwinkel (33) ermittelt wird.

## Claims

1. A method of determining the residual gas (31) in the combustion chamber of a cylinder of a four-stroke internal combustion engine,
- wherein the intake valve inclination (21), that is the distance in °KW between the top dead centre of the piston after a gas change and the intake valve when completely open, the exhaust valve inclination (22), that is the distance in °KW between the exhaust valve when completely open and the top dead centre of the piston after a gas change, the intake valve stroke (23) and the exhaust valve stroke (24) are determined during a four-stroke cycle,
- wherein the exhaust valve inclination (22) and the exhaust valve stroke (24), via a first performance graph (25), are used to calculate a first residual gas portion (26) corresponding to an amount of residual gas which is sucked back into the engine combustion chamber through the exhaust valve between the top dead centre of the piston after a gas change and the closing time of the exhaust valve,
- wherein the intake valve inclination (21), the exhaust valve inclination (22), the intake valve stroke (23) and the exhaust valve stroke (24), via a second performance graph (27), are used to determine a valve overlap area, the size of which is determined together with its displacement relative to the top dead centre of the piston after a gas change, from which a second residual gas portion (28) is determined corresponding to an amount which, between the opening time of the intake valve and the closing time of the exhaust valve, flows from a cylinder outer region behind the exhaust valve into a cylinder outer region in front of the intake valve, and
- wherein the exhaust gas (31) in the engine combustion chamber is calculated by obtaining the sum of the first residual gas portion (26) and the second residual gas portion (28).

2. A method according to claim 1, wherein the displacement of the valve overlap area relative to the top dead centre of the piston after a gas change is obtained by determining the centre of gravity position (40) of the valve overlap area relative to the top dead centre of the piston after a gas change.

3. A method according to claim 1 or 2, wherein the residual gas (31) in the cylinder combustion chamber is calculated by weighting the sum of the two residual gas portions (26, 28) with weighting factors (30).

4. A method according to claim 3, wherein the weighting factors (30) taken into consideration are the speed of the engine and/or a differential pressure, wherein the differential pressure is calculated from a gas pressure in the cylinder outer region in front of the intake valve and a gas pressure in the cylinder outer region behind the exhaust valve.

5. A method of determining an ignition angle (33) for a cylinder in an internal combustion engine, wherein the method according to any of claims 1 to 4 is used to determine the residual gas (31) in the cylinder combustion chamber and an ignition angle (33) is determined from the residual gas (31), using a characteristic curve (32).

## Revendications

1. Procédé de détermination du gaz résiduel (31) dans la chambre de combustion d'un cylindre d'un moteur à combustion interne à quatre temps,
selon lequel
- on détermine pendant un cycle de quatre temps, l'avance de soupape d'admission (21), qui désigne la distance en ° KW d'angle vilebrequin entre le point mort haut du piston au changement de charge et la soupape d'admission complètement ouverte, et l'avance de soupape d'échappement (22), qui désigne la distance en ° KW entre la soupape d'échappement complètement ouverte et le point mort haut du piston au changement de charge, la course de soupape d'admission (23) et la course de soupape d'échappement (24),
- on détermine à partir de l'avance de soupape d'échappement (22) et la course de soupape d'échappement (24), à l'aide d'un premier champ de caractéristiques (25), une première proportion de teneur en gaz résiduel (26), qui correspond à une quantité de gaz résiduel ré-aspirée dans la chambre de combustion du cylindre par la soupape d'échappement entre le point mort haut du piston au changement de charge et l'instant de fermeture de la soupape d'échappement,
- une surface de croisement de soupapes est déterminée à partir de l'avance de soupape d'admission (21), de l'avance de soupape d'échappement (22), de la course de soupape d'admission (23) et de la course de soupape d'échappement (24), à l'aide d'un deuxième champ de caractéristiques (27), dont le contenu de surface et le décalage vers le point mort haut du piston au changement de charge sont déterminés, ce à partir de quoi on détermine une deuxième proportion de teneur en gaz résiduel (28), qui correspond à une quantité de gaz résiduel qui s'écoule entre l'instant d'ouverture de la soupape d'admission et l'instant de fermeture de la soupape d'échappement d'une zone extérieure du cylindre derrière la soupape d'échappement dans une zone extérieure du cylindre devant la soupape d'admission, et
- on calcule la teneur en gaz résiduel (31) dans la chambre de combustion du cylindre en formant la somme de la première proportion de teneur en gaz résiduel (26) et de la deuxième proportion de teneur en gaz résiduel (28).

2. Procédé selon la revendication 1,
selon lequel le décalage de la surface de croisement de soupapes au point mort haut du piston au changement de charge est déterminé en évaluant la position du centre de gravité (40) de la surface de croisement de soupapes au point mort haut du piston au changement de charge.

3. Procédé selon la revendication 1 ou 2,
selon lequel la teneur en gaz résiduel (31) dans la chambre de combustion du cylindre est calculée en pondérant avec des facteurs de pondération (30) la somme des deux proportions de teneur en gaz résiduel (26, 28).

4. Procédé selon la revendication 3,
selon lequel la vitesse de rotation du moteur à combustion interne et/ou une pression de différence sont prises en compte en tant que facteurs de pondération (30), la pression de différence étant calculée à partir d'une pression de gaz dans la zone extérieure de cylindre devant la soupape d'admission ainsi que d'une pression de gaz dans la zone extérieure de cylindre derrière la soupape d'échappement.

5. Procédé de détermination d'un angle d'allumage (33) d'un cylindre d'un moteur à combustion interne,
selon lequel, par le procédé selon l'une quelconque des revendications 1 à 4, on calcule une teneur en gaz résiduel (31) dans la chambre de combustion du cylindre est calculée et, à partir de la teneur en gaz résiduel (31), un angle d'allumage (33) est déterminé en utilisant un champ de caractéristiques (32).
